**Europäisches Patentamt**

**European Patent Office**

**Office européen des brevets**

(19)

(11) Veröffentlichungsnummer: **0 157 729**
**B1**

(12) **EUROPÄISCHE PATENTSCHRIFT**

(45) Veröffentlichungstag der Patentschrift:
**03.06.87**

(51) Int. Cl.⁴: **H 02 M 3/335**

(21) Anmeldenummer: **85730042.0**

(22) Anmeldetag: **20.03.85**

(54) Gleichspannungswandler.

(30) Priorität: **30.03.84 DE 3412444**

(43) Veröffentlichungstag der Anmeldung:
**09.10.85 Patentblatt 85/41**

(45) Bekanntmachung des Hinweises auf die Patenterteilung:
**03.06.87 Patentblatt 87/23**

(84) Benannte Vertragsstaaten:
**CH DE FR GB IT LI**

(56) Entgegenhaltungen:
**GB - A - 2 097 606**
**US - A - 3 818 311**

(73) Patentinhaber: **Siemens Aktiengesellschaft Berlin und München, Wittelsbacherplatz 2, D-8000 München 2 (DE)**

(72) Erfinder: **Lesche, Wolfgang, Dipl.-Ing., Wildbergweg 13, D-1000 Berlin 37 (DE)**
Erfinder: **Margaris, Panajotis, Ing. (grad.), Hennigsdorferstrasse 145-157 Haus 13, D-1000 Berlin 27 (DE)**

## Beschreibung

Die Erfindung betrifft einen Gleichspannungswandler mit einem Transformator, dessen Primärwicklung in Reihe mit einer Schalteinrichtung an einer Spannunsquelle liegt, und mit einer Schutzanordnung, die der Reihenschaltung aus Primärwicklung und Schalteinrichtung zugeordnet ist und einen Kondensator enthält.

In der «etz», Heft 2, Januar 1984, ist auf Seite 91 in Bild 3 ein derartiger Gleichspannungswandler als Bestandteil eines Schaltnetzteiles dargestellt. Der bekannte Gleichspannungswandler enthält einen Transformator, dessen Primärwicklung in Reihe mit einer aus zwei Transistoren bestehenden Schalteinrichtung an einer Gleichspannungsquelle liegt. Die Schalteinrichtung weist einen Steuereingang auf, mit dem sie an dem Ausgang einer Taktgeberschaltung angeschlossen ist. Die Sekundärseite des Transformators bildet einen Gleichspannungsausgangskreis, in dem die Sekundärwicklung des Transformators über eine Gleichrichteranordnung und ein nachgeordnetes Siebfilter mit den Ausgangsanschlüssen des Gleichspannungswandlers verbunden ist. Entsprechend der Steuerung durch die Taktgeberschaltung schaltet die Schalteinrichtung periodisch die Primärwicklung des Transformators an die Gleichspannungsquelle und wieder von derselben ab. Damit beim Abschalten der Primärwicklung des Transformators keine Überspannungen an der Schalteinrichtung entstehen, weist der Transformator eine zusätzliche Entmagnetisierungswicklung auf, über die er sich im Abschaltmoment entmagnetisieren kann. Die Entmagnetisierungswicklung kann jedoch nur eine Entmagnetisierung der mit ihr magnetisch gekoppelten Induktivitätsanteile des Transformators bewirken; zur Entmagnetisierung der Streuinduktivitäten des Transformators weist daher die bekannte Schaltungsanordnung eine Schutzanordnung auf, die einen Kondensator enthält, der in Reihe mit einer Diode und einem Parallelwiderstand zur Diode in einem Parallelzweig zu der Schalteinrichtung liegt. Der Parallelwiderstand ermöglicht bei erneutem Einschalten der Schalteinrichtung die Entladung des Kondensators und begrenzt dabei den Entladestrom des Kondensators durch die Schalteinrichtung, so dass eine thermische Überlastung der Schalteinrichtung durch den Entladestrom verhindert wird; jedoch treten in dem Parallelwiderstand gleichzeitig Verluste auf, die in Wärme umgesetzt werden.

Ferner ist es unter anderem aus der Druckschrift «Siemens-Schaltbeispiel, Sperrwandler-SNT mit mehreren Ausgangsspannungen», Best.-Nr. B/3032, 1983, Seite 2, Bild 1 bekannt, eine Schutzanordnung mit einem Kondensator und einem Parallelwiderstand parallel zu der Primärwicklung des Transformators anzuordnen. Der Parallelwiderstand ermöglicht während der Ausschaltdauer der Schalteinrichtung eine Entladung des Kondensators, wobei jedoch Verluste in dem Parallelwiderstand auftreten.

Der Erfindung liegt die Aufgabe zugrunde, eine Schutzanordnung für einen Gleichspannungswandler anzugeben, die die Schalteinrichtung vor Überspannungen und thermischen Überlastungen schützt und dabei gleichzeitig zur Verringerung der Verlustleistungen in dem Gleichspannungswandler beiträgt.

Zur Lösung dieser Aufgabe enthält die Schutzanordnung in dem Gleichspannungswandler der eingangs angegebenen Art erfindungsgemäss einen Übertrager, dessen Primärwicklung in Reihe mit dem Kondensator parallel zur Primärwicklung des Transformators oder parallel zur Schalteinrichtung liegt und dessen Sekundärwicklung in Reihe mit einer Diode an einer Nutzlast angeschlossen ist.

Bei dem erfindungsgemässen Gleichspannungswandler fliesst ein Entmagnetisierungsstrom des Transformators durch die Primärwicklung des Übertragers und den Kondensator, sobald die Schalteinrichtung die Primärwicklung des Transformators von der Spannungsquelle abschaltet; daher kann an der Schalteinrichtung keine für diese schädliche Überspannung auftreten. Die mit der Sekundärwicklung des Übertragers in Reihe liegende Diode ist dabei im Hinblick auf den Wicklungssinn der Primär- und Sekundärwicklung des Übertragers derart angeordnet, dass sie bei dem Entmagnetisierungsstrom durch die Primärwicklung für den in der Sekundärwicklung induzierten Strom leitend ist. Die Energie des Entmagnetisierungsstromes wird daher in vorteilhafter Weise von dem Übertrager an die Nutzlast abgegeben. Bei dem auf dem Abschaltvorgang folgenden Einschaltvorgang der Schalteinrichtung kehrt sich die Richtung des durch die Primärwicklung des Übertragers fliessenden Stromes um, so dass die Diode an der Sekundärseite des Übertragers sperrt. Die Primärwicklung des Übertragers wirkt daher wie eine Drossel, die im Einschaltmoment der Schalteinrichtung den von dem Kondensator verursachten Stromanteil durch die Schalteinrichtung begrenzt und so die Schalteinrichtung vor thermischer Überlastung schützt.

Ein Vorteil des erfindungsgemässen Gleichspannungswandlers besteht darin, dass seine Schutzschaltung keine ohmschen Widerstände enthält, so dass keine Verlustleistungen auftreten.

Daher kann insbesondere bei mit Transformatoren zur galvanischen Trennung ausgerüsteten Durchflusswandlern, in denen eine periodische Entmagnetisierung des Transformators notwendig ist, eine zusätzliche und daher aufwendige Entmagnetisierungswicklung des Transformators entfallen, weil die Schutzanordnung des erfindungsgemässen Gleichspannungswandlers im Ausschaltmoment der Schalteinrichtung auch grosse Entmagnetisierungsströme ohne Verluste aufnehmen kann, um so die Schalteinrichtung von den für sie schädlichen Überspannungen zu schützen.

Ein weiterer Vorteil des erfindungsgemässen Gleichspannungswandlers besteht darin, dass sich die Entmagnetisierungsenergie des Transformators mit Hilfe des Übertragers einer beliebigen Nutzlast zuführen lässt; die Nutzlast kann dabei insbesondere aus weiteren Schaltungsteilen des erfindungsgemässen Gleichspannungswandlers bestehen, die auf diese Weise mit der Entmagnetisierungsenergie des Transformators versorgt werden. Der Übertrager bewirkt dabei gleichzeitig eine galvanische Trennung der Nutzlast von dem aus der Spannungsquelle, der Primärwicklung des Transformators und der Schalteinrichtung gebildeten Stromkreis.

Bei einer besonder vorteilhaften Weiterbildung des erfindungsgemässen Gleichspannungswandlers ist die Sekundärwicklung des Übertragers in Reihe mit der Diode an Ausgangsanschlüssen des Gleichspannungswandlers angeschlossen. Auf diese Weise wird nämlich die Entmagnetisierungsenergie des Transformators an die an den Ausgangsanschlüssen des Gleichspannungswandlers liegende Nutzlast abgegeben und so eine Erhöhung des Wirkungsgrades des Gleichspannungswandlers erzielt.

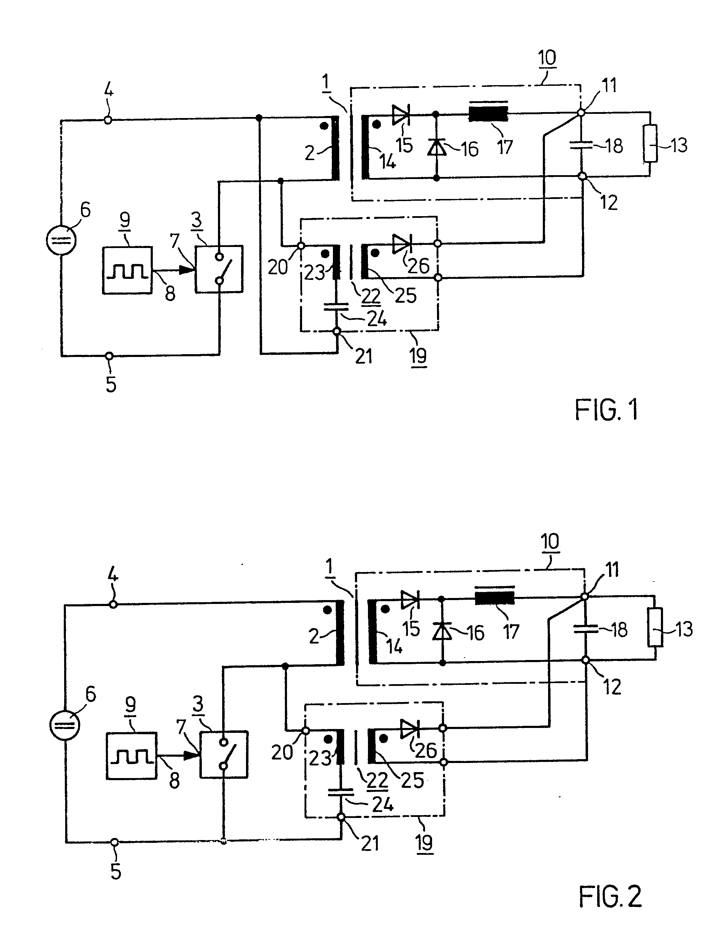

Zur Erläuterung der Erfindung ist in Figur 1 ein erstes Ausführungsbeispiel des erfindungsgemässen Gleichspannungswandlers mit einer parallel zur Primärwicklung des Transformators angeordneten Schutzanordnung und in Figur 2 ein zweites Ausführungsbeispiel des erfindungsgemässen Gleichspannungswandlers mit einer parallel zur Schalteinrichtung liegenden Schutzanordnung dargestellt.

Der in den Figuren 1 und 2 gezeigte Gleichspannungswandler stellt einen Durchflusswandler dar. Dieser enthält einen Transformator 1, dessen Primärwicklung 2 in Reihe mit einer Schalteinrichtung 3 an den Anschlüssen 4 und 5 einer Spannungsquelle 6 angeschlossen ist. Die Spannungsquelle 6 enthält in bekannter Weise einen nicht dargestellten wechselstromgespeisten Netzgleichrichter, dessen Ausgangsklemmen die Anschlüsse 4 und 5 der Spannungsquelle 6 bilden. Die Schalteinrichtung 3 weist einen Steuereingang 7 auf, bei dessen Ansteuerung die Schalteinrichtung 3 die Primärwicklung 2 des Transformators 1 an die Spannungsquelle 6 schaltet bzw. von dieser abtrennt. Als Schalteinrichtung 3 kann dabei ein bipolarer Schalttransistor oder ein Feldeffekttransistor Verwendung finden, dessen Basis- bzw. Gate-Anschluss den Steuereingang 7 bildet. Der Steuereingang 7 der Schalteinrichtung 3 ist an dem Ausgang 8 einer Taktgeberschaltung 9 angeschlossen, die zur Steuerung der Schalteinrichtung 3 Taktimpulse mit veränderbarer Impulsbreite abgibt. Eine derartige Taktgeberschaltung ist beispielsweise in der bereits oben genannten «etz» Heft 2, 1984, auf Seite 91 in Bild 3 dargestellt. Die Sekundärseite des Transformators 1 bildet einen Gleichspannungsausgangskreis 10, an dessen Ausgangsanschlüssen 11 und 12 eine Nutzlast 13 liegt. In dem Gleichspannungsausgangskreis 10 ist der Sekundärwicklung 14 des Transformators 1 eine Gleichrichteranordnung bestehend aus einer Gleichrichterdiode 15 und einer Freilaufdiode 16 nachgeordnet; an der Freilaufdiode 16 ist ein Siebfilter angeschlossen, das aus einer Drosselspule 17 im Längszweig und einem Glättungskondensator 18 im Querzweig besteht; die Anschlussklemmen des Glättungskondensators 18 bilden die Ausgangsanschlüsse 11 und 12 des Gleichspannungsausgangskreises 10.

Beide Ausführungsbeispiele der erfindungsgemässen Schaltungsanordnung nach Figur 1 und 2 enthalten jeweils eine Schutzanordnung 19, die mit zwei Anschlüssen 20 und 21 entsprechend dem Ausführungsbeispiel nach Figur 1 parallel zu der Primärwicklung 2 des Transformators 1 und gemäss dem Ausführungsbeispiel nach Figur 2 parallel zu der Schalteinrichtung 3 angeordnet ist. Die Schutzanordnung 19 enthält einen Übertrager 22, der mit seiner Primärwicklung 23 in Reihe mit einem Kondensator 24 zwischen den Anschlüssen 20 und 21 der Schutzanordnung 19 liegt; die Sekundärwicklung 25 des Übertragers 22 ist in Reihe mit einer Diode 26 an den Ausgangsanschlüssen 11 und 12 des Gleichspannungsausgangskreises 10 und damit parallel zu dem Glättungskondensator 18 und zur Nutzlast 13 angeschlossen.

Die Spannungsquelle 6 erzeugt mit Hilfe ihres nicht dargestellten wechselstromgespeisten Netzgleichrichters an ihren Anschlüssen 4 und 5 eine Gleichspannung. Der Transformator 1 wird mit seiner Primärwicklung 2 entsprechend den Taktimpulsen am Ausgang 8 der Taktgeberschaltung 9 von der Schalteinrichtung 3 periodisch an die Spannungsquelle 6 geschaltet und von dieser wieder abgeschaltet. Während der Einschaltzeit der Schalteinrichtung 3 wird die Energie aus der Spannungsquelle 6 von der Primärseite des Transformators 1 auf dessen Sekundärseite zu dem Gleichspannungsausgangskreis 10 übertragen; die Gleichrichterdiode 15 des Gleichspannungsausgangskreises 10 ist dabei leitend. In der Ausschaltzeit der Schalteinrichtung 3 ist die Gleichrichterdiode 15 sperrend, so dass keine Energieübertragung von der Primärseite zur Sekundärseite des Transformators 1 stattfindet. An der Sekundärwicklung 14 des Transformators 1 entsteht daher eine Folge von rechteckförmigen Wechselspannungsimpulsen, die einen pulsförmigen Gleichstrom durch die Gleichrichterdiode 15 bewirken, wobei die Dauer des Stromimpulses der Einschaltdauer der Schalteinrichtung 3 entspricht. Bei jedem Stromimpuls wird die Drosselspule 17 magnetisiert und gibt nach jedem Stromimpuls während der Ausschaltzeit der Schalteinrichtung 3 die in ihr gespeicherte Magnetisierungsenergie in Form eines durch die Freilaufdiode 16 fliessenden Entmagnetisierungsstromes ab, so dass durch die Drosselspule 17 und die Nutzlast 13 ein stetiger Gleichstrom fliesst.

Jedes Mal, wenn die Schalteinrichtung 3 die Primärwicklung 2 des Transformators 1 von der Spannungsquelle 6 abschaltet, findet eine Entmagnetisierung des Transformators 1 statt. Diese kann nur durch einen Entmagnetisierungsstrom über die Primärwicklung 2 des Transformators 1 erfolgen, da zu diesem Zeitpunkt die Gleichrichterdiode 15 in dem Gleichspannungsausgangskreis 10 sperrend ist. Damit infolge des Entmagnetisierungsstromes keine Überspannung an der Schalteinrichtung 3 auftreten kann, ist in beiden Ausführungsbeispielen des erfindungsgemässen Gleichspannungswandlers nach den Figuren 1 und 2 jeweils die Schutzanordnung 19 zur Aufnahme des Entmagnetisierungsstromes vorgesehen. Dabei fliesst der Entmagnetisierungsstrom des Transformators 1 durch die Primärwicklung 23 des Übertragers 22 und den Kondensator 24. Der in der Primärwicklung 23 des Übertragers 22 fliessende Strom induziert in der Sekundärwicklung 25 des Übertragers 22 eine Spannung, die einen Stromfluss durch die leitende Diode 26 und somit eine Übertragung der Entmagnetisierungsenergie des Transformators 1 zur Nutzlast 13 bewirkt.

Bei dem auf den Abschaltvorgang folgenden Einschaltvorgang der Schalteinrichtung 3 fliesst zusätzlich zu einem Magnetisierungsstrom durch die Primärwicklung 2 des Transformators 1 ein weiterer, durch den Kondensator 24 der Schutzanordnung 19 verursachter Stromanteil durch die Schalteinrichtung 3. Bei dem Ausführungsbeispiel nach Fig. 1 entspricht dieser weitere Stromanteil einem Ladestrom aus der Spannungsquelle 6 über die Schalteinrichtung 3 und die Primärwicklung 23 des Übertragers 22 in den Kondensator 24, während bei dem Ausführungsbeispiel nach Fig. 2 der weitere Stromanteil durch die Entladung des Kondensators 24 über die Primärwicklung 23 des Übertragers 22 und die Schalteinrichtung 3 verursacht ist. In beiden Fällen induziert der von dem Kondensator 24 verursachte weitere Stromanteil in der Sekundärwicklung 25 des Übertragers 22 eine Spannung, die ein Sperren der Diode 26 zur Folge hat. Die Primärwicklung 23 des Übertragers 22 wirkt daher wie eine Drossel, die den weiteren Stromanteil begrenzt und so eine thermische Überlastung der Schalteinrichtung 3 verhindert.

**Patentansprüche**

1. Gleichspannungswandler mit einem Transformator (1), dessen Primärwicklung (2) in Reihe mit einer Schalteinrichtung (3) an einer Spannungsquelle (6) liegt, und mit einer Schutzanordnung (19), die der Reihenschaltung aus Primärwicklung (2) und Schalteinrichtung (3) zugeordnet ist und einen Kondensator (24) enthält, dadurch gekennzeichnet, dass die Schutzanordnung (19) ausserdem einen Übertrager (22) enthält, dass die Primärwicklung (23) des Übertragers (22) in Reihe mit dem Kondensator (24) parallel zur Primärwicklung (2) des Transformators (1) oder parallel zur Schalteinrichtung (3) liegt und dass die Sekundärwicklung (25) des Übertragers (22) in Reihe mit einer Diode (26) an einer Nutzlast (13) angeschlossen ist.

2. Gleichspannungswandler nach Anspruch 1, dadurch gekennzeichnet, dass die Sekundärwicklung (25) des Übertragers (22) in Reihe mit der Diode (26) an Ausgangsanschlüssen (11, 12) des Gleichspannungswandlers angeschlossen ist.

**Claims**

1. A d.c. voltage converter comprising a transformer (1), the primary winding (2) of which is connected to a voltage source (6) in series with a switching device (3), and comprising a protective arrangement (19) assigned to the series arrangement of primary winding (2) and switching device (3) and containing a capacitor (24), characterised in that the protective arrangement (19) also contains a transformer (22) with its primary winding (23) in series with the capacitor (24) arranged in parallel to the primary winding (2) of the transformer (1) or in parallel to the switching device (3), and that the secondary winding (25) of the transformer (22) is connected in series with a diode (26) to a useful load (13).

2. A d.c. voltage converter as claimed in Claim 1, characterised in that the secondary winding (25) of the transformer (22) is connected in series with the diode (26) to output terminals (11, 12) of the d.c. voltage converter.

**Revendications**

1. Convertisseur de courant continu comportant un transformateur (1), dont l'enroulement primaire (2), qui est branché en série avec un dispositif de commutation (3), est raccordé à une source de tension (6), et un dispositif de protection (19) qui est associé au montage série formé de l'enroulement primaire (2) et du dispositif de commutation (3) et qui contient un condensateur (24), caractérisé par le fait que le dispositif de protection (19) contient en outre un transformateur (22) que l'enroulement primaire (23) du transformateur (22), qui est en série avec le condensateur (24), est branché en parallèle avec l'enroulement primaire (2) du transformateur (1) ou en parallèle avec le dispositif de commutation (3) et que l'enroulement secondaire (25) du transformateur (22), qui est branché en série avec une diode (26), est raccordé à une charge utile (13).

2. Convertisseur de courant continu selon la revendication 1, caractérisé en ce que l'enroulement secondaire (25) du transformateur (22), qui est branché en série avec la diode (26), est raccordé à des bornes de sortie (11, 12) du convertisseur de courant continu.

FIG. 1

FIG. 2